# EUROPÄISCHE PATENTSCHRIFT

(11) **EP 2 837 165 B1**
(45) Veröffentlichungstag und Bekanntmachung des Hinweises auf die Patenterteilung: **12.08.2020**
(21) Anmeldenummer: 13717019.7
(22) Anmeldetag: 12.04.2013
(51) Int. Cl.: H04M 1/02, H04M 1/725, B62B 3/14, G06F 13/40, G06Q 20/32, H04M 1/04, G07G 1/00, G06Q 20/20

(54) **HALTERUNG FÜR EIN MOBILES ENDGERÄT ZUR NUTZUNG ALS SELF-SCANNER**
CRADLE FOR A MOBILE TERMINAL DEVICE FOR USE AS SELF-SCANNER
SUPPORT D'UN TERMINAL MOBILE POUR L'UTILISATION COMME LECTEUR DE CODE-BARRES

(30) Priorität: 13.04.2012 DE 102012103200; 01.06.2012 DE 102012104772
(43) Veröffentlichungstag der Anmeldung: 18.02.2015
(73) Patentinhaber: Wieth, Franz, 82178 Puchheim (DE); Filosi, Andreas, 82178 Puchheim (DE)
(72) Erfinder: WIETH, Franz, 82178 Puchheim (DE); SONNENDORFER, Horst, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2013/057695
(87) Internationale Veröffentlichungsnummer: WO 2013/153204

(56) Entgegenhaltungen:
- WO-A1-98/30427
- WO-A1-2006/117627
- DE-U1- 29 601 036
- DE-U1-202010 004 543
- US-A1- 2004 111 320
- US-B1- 6 708 887

## Beschreibung

Die Erfindung betrifft eine Kombination aus einem mobilen Endgerät und einer Halterung, wobei die Halterung eine Aufnahme für das mobile Endgerät umfasst und wobei die Halterung eine erste Schnittstelle zur Übertragung von Daten vom mobilen Telekommunikations-Endgerät an die Halterung aufweist.

Die seit vielen Jahren im Groß- und Einzelhandel genutzten Kassensysteme haben den Nachteil, dass sie nur sehr personalintensiv zu betreiben sind. Das Kassenpersonal muss die zu bezahlenden Waren einzeln greifen und jeweils über einen Barcode-Scanner in das Kassensystem einlesen. Das einzelne Einscannen der Waren benötigt seine Zeit, pro Minute kann das Kassenpersonal somit immer nur eine begrenzte Anzahl von Artikeln erfassen. Um eine für den Kunden lästige Schlangenbildung vor den Kassen zu vermeiden, sind deshalb oft mehrere Kassen parallel geöffnet. Entsprechend viel Kassenpersonal muss vor gehalten werden.

Der ganze Bezahlvorgang ist darüber hinaus in mehrfacher Hinsicht unpraktisch. Die ausgesuchten Waren wurden vom Kunden während seines Einkaufs bereits in den Einkaufswagen gelegt. Zum Bezahlen müssen sie von ihm wieder gegriffen und auf das Kassen-Förderband gelegt werden. Nach Beendigung des Bezahlvorgangs lädt sie der Kunde erneut ein, beispielsweise um sie im Einkaufswagen noch bis zum Auto transportiert zu können.

Mit dem lästigen Ein-, Aus- und wieder Einladen wird dem Kunden zugemutet, einen großen Teil des Arbeitsaufwandes beim Bezahlen selbst zu übernehmen. Das wird vom Kunden nur deshalb akzeptiert, weil seine Mitarbeit die Wartezeit verkürzt. Auf das Kassen-Förderband gelegt, werden die Waren in den Nahbereich des Kassenpersonals transportiert. Das minimiert den erforderlichen Zeitaufwand für das Scannen, da die für das Einlesen der Waren erforderlichen Bewegungen des Kassenpersonals reduziert werden. Der Kunde unterstützt damit das Kassenpersonal und verhindert, dass der Bezahlvorgang sich ansonsten noch weiter in die Länge ziehen würde. Die Mitarbeit des Kunden macht damit Sinn.

Trotz aller bisher durchgeführter Optimierungen dieses Ablaufes kann der grundsätzliche Mangel der Kassensysteme aber nicht überwunden werden. Jede der zu bezahlenden Waren muss aufwändig in einer Zusammenarbeit von Kunden und Kassenpersonal mehrfach gegriffen und bewegt werden.

Sowohl für den Kunden wie auch für den Handel wäre es praktisch, das für einen Bezahlvorgang erforderlichen umständliche Ein- und Ausladen zu verhindern und so die erforderlichen Handlungen auf ein Minimum reduzieren zu können. Seit einigen Jahren werden hierzu verschiedene Ansätze erprobt. Eine Überlegung geht dahin, das Kassenpersonal weiter zu entlasten und stattdessen den Kunde noch mehr in den Bezahlvorgang ein zu binden. Diese Möglichkeit bieten sogenannte Selfscanning-Systeme, die in zunehmenden Maße in Filialen des Lebensmitteleinzelhandels eingesetzt werden. Grundprinzip solcher SelfscanningSysteme ist es, dass der Kunde die von ihm ausgesuchten Waren bereits während seines Einkaufs über einen ihm mitgegebenen Selfscanner einliest. An der Kasse muss dann lediglich der Selfscanner dem Kassenpersonal übergeben, ausgelesen und der angezeigte Gesamtbetrag bezahlt werden. Die vom Kunden ausgesuchten Waren können derweil im Einkaufswagen verbleiben, das umständlichen Aus- und wieder Einladen zum Einlesen der Waren in das Kassensystem entfällt.

Allerdings erfordert der Einsatz von Selfscannern einen nicht unerheblichen Kapitaleinsatz für das Aus- und Umrüsten der Filialen. Jede Filiale muss, angepasst an ihre Größe, eine Vielzahl von Scannern bereitstellen. Bei großen Geschäften mit Selfscanning-Systemen werden nicht selten bis zu 100 Selfscanner vorgehalten, von denen ein jeder bis zu € 250 kosten kann. Zudem muss in die dazugehörige Technik investiert werden. Die Kapitalbindung wiegt umso schwerer, da die Selfscanner außer der Scanfunktion und der Schnittstelle zur Kasse praktisch keinen weiteren Mehrwert bieten.

Im Gegensatz zu einem proprietären Selfscanner sind die modernen mobilen Endgeräte, wie beispielsweise Smartphones oder Pads, darauf ausgelegt, dass der Besitzer sie an seine jeweiligen Bedürfnisse und Vorlieben anpassen kann. Von ihrer ursprünglichen Zweck, der Bereitstellung mobiler Telekommunikation, haben sie sich immer mehr entfernt. Die heute verfügbaren Mobil-Telefone und Pads sind weit mehr als nur mobile Telekommunikations-Endgeräte. Sie sind mittlerweile vernetzte mobile Computer, die von ihrem Besitzer jederzeit und überall hin mitgeführt werden. Mit ihrer zunehmenden Verbreitung vergrößern sich auch Ihre Einsatzmöglichkeiten. Immer öfter gewinnen die Smartphones auch rund um den Einkauf an Bedeutung. Beispielsweise sind mittlerweile Programmapplikationen verfügbar, sogenannte Apps, über die ein Einkaufszettel von unterwegs oder zu Hause auf dem mobilen Endgerät erstellt und im Geschäft während des Einkaufs abgerufen werden kann. Im Weiteren werden die Begriffe Smartphone und Pad als Synonym für mobile Telekommunikations-Endgeräte verwendet.

Das Dokument US 6,708,887 B1 zeigt eine Halterung für einen PDA, die mittels eines Joystick-artigen Handgriffs komfortabel getragen werden kann. Die Bedienung des PDA's erfolgt über einen im Handgriff ausgebildeten Trigger, der über eine in der Halterung ausgebildete Schnittstelle mit dem PDA verbunden ist.

Dokument US2004111320 A1 offenbart ein elektronisches Tablet, welches eine Aufnahme für einen mobilen Handscanner hat, wobei dieser Scanner als Lesegerät für Produkte verwendet wird und mit dem Tablet kommuniziert. Das Tablet selber kann an einer Halterung an einem Einkaufswagen befestigt werden und kommuniziert wiederum selber mit einem Server im Einkaufscenter.

Aufgabe der vorliegenden Erfindung ist es, eine Alternative zu den bekannten Selfscannern vorzuschlagen, mit welcher ein Einkauf genauso einfach und zeitsparend durchgeführt werden kann und die zugleich erlaubt, rund um den Einkauf weiteren Funktionen anzubieten.

Diese Aufgabe wird gelöst durch eine Kombination mit den Merkmalen des Anspruchs 1. Ein die erfindungsgemäße Kombination umfassendes Bezahlsystem für den Groß- und Einzelhandel wird in Anspruch 5 gefasst. Anspruch 6 betrifft die Verwendung einer erfindungsgemäßen Kombination. Nicht zur Erfindung gehöhrt die hier beschriebene Scannerwand zur Aufnahme einer Vielzahl von Halterungen sowie eine auf einem mobilen Endgerät installierbare Software-Applikation zur Steuerung bestimmter Funktionen der Halterung und/oder des Einkaufswagens. Besonders vorteilhafte Ausführungen werden in den jeweiligen Unteransprüchen genannt.

Ein wesentlicher Grundgedanke der Erfindung ist es, eine Kombination der eingangs genannten Art bereit zu stellen, die dem Kunden den Gebrauch seines mobilen Endgeräts als Selfscanner ermöglicht. Die Halterung bildet dabei eine Art Adapter für sein Smartphone aus, welches vom Kunde in das Geschäft mitgebracht wird. Hierfür weist die erfindungsgemäße Halterung eine erste Schnittstelle zur Übertragung von wird. Hierfür weist die erfindungsgemäße Halterung eine erste Schnittstelle zur Übertragung von Daten von dem mobilen Endgerät an die Halterung und eine zweite Schnittstelle zur Übertragung von Daten von der Halterung an ein Kassensystem auf. Des weiteren umfasst die Halterung ein Befestigungsmittel zur lösbaren Befestigung der Halterung am Einkaufswagen.

Die modernen mobilen Endgeräte verfügen im Regelfall über eine Kamera mit einer Auflösung im Megapixelbereich. Die Erfindung macht es sich zu nutze, dass die Qualität dieser Kameras ausreicht, an den Waren oder deren Verpackung befindliche Identifikationscodes, wie beispielsweise Barcodes, aufzunehmen. Was den mobilen Endgeräten fehlt, ist eine Schnittstelle, über die sie ihre Daten an die proprietären Kassensysteme übermitteln können. Diese Schnittstelle wird von der Halterung in Form seiner ersten und zweiten Schnittstelle bereitgestellt. Das lösbare Befestigungsmittel ermöglicht es dabei, das mobile Endgerät über die Halterung am Einkaufswagen anbringen zu können, wodurch der Kunde beide Hände während des Einkaufs benutzen kann. Besonders geeignet für die Anbringung der Halterung ist der Griff des Einkaufswagens, da es dort das Einladen von Waren in den Einkaufswagenkorb nicht behindert und für den Kunden stets griffbereit ist.

Das mit der Halterung verbundene mobile Endgerät des Kunden kann somit als Selfscanner beim Einkaufen verwendet werden. Entsprechende Programmapplikationen zum Auslesen eines Barcodes sind mittlerweile weit verbreitet. Sie werden genutzt, um mit dem Smartphone ein Produkt anhand seines Barcodes zu identifizieren und darüber verfügbare Informationen im Internet nachzulesen. Es sind auch Apps verfügbar, die eingescannte Produkte automatisch in eine Einkaufsliste eintragen. Diese einzeln bereits genutzten Funktionalitäten können durch die Halterung in den Selfscan-Prozess eingebunden werden. Die erfindungsgemäßen Schnittstellen ermöglichen es, vom Smartphone erfassten Daten an die Halterung zu übertragen und von dort an ein Kassensystem zu übermitteln.

Weitere optionale Funktionen betreffen die Angabe, wo im besuchten Geschäft bestimmte Waren zu finden sind, sowie die Führung des Kunden durch das Geschäft, beispielsweise per GPS. In Abhängigkeit von der momentanen Position des Kunden kann ihm zielgenau Informationen zu bestimmten Produkten übermittelt werden. Darüber hinaus ist es möglich, die Kundenströme im Geschäft zu verfolgen und hierdurch die Präsentationsflächen der Waren zu optimieren. Zudem sind mittlerweile Systeme bekannt, die eine Bezahlfunktion in ein Smartphone integrieren und so im Zusammenwirken mit dem Selfscannen den Bezahlvorgang noch komfortabler machen.

In einer bevorzugten Ausführungsform weist die Halterung einen Energiespeicher und eine dritte Schnittstelle zur Übertragung von Energie an das mobile Endgerät auf, die mit dem Energiespeicher verbunden ist. Die so während des Einkaufs mögliche Aufladung des Energiespeichers im mobilen Endgerät ist ein Bonus, der den Kunden noch zusätzlich animiert, die Halterung zu verwenden. Der Energiespeicher ist vorzugsweise vollständig in die Halterung integriert, so dass eine Entladung durch einen versehentlichen Kontakt verhindert wird. Er ist insbesondere wiederaufladbar. Eine vor der Ausgabe der Halterung an den Kunden durchgeführte Aufladung ermöglicht einen stets ausreichenden Ladestatus des Energiespeichers. Ist der Energiespeicher lösbar an der Halterung befestigt, kann er bei Defekt oder nachlassender Ladekapazität ausgetauscht werden.

Bei der Nummerierung der hier beschriebenen Schnittstellen ist zu beachten, dass sie rein übersichtshalber erfolgt. Selbstverständlich können mehrere Schnittstellen zwischen zwei Geräten auch zu einer Schnittstelle zusammengefasst sein.

Der Energiespeicher der Halterung kann alternativ oder zusätzlich dazu genutzt werden, über eine vierte Schnittstelle Energie an den Einkaufswagen zu übertragen. Energie am Einkaufswagen kann vielfältig genutzt werden, ist aber nur aufwändig bereitzustellen. Der Einkaufswagen als oft in Bewegung befindliches Objekt ist nur schwierig mit Energie zu versorgen. Entweder müssen an ihm angebrachte Energiespeicher immer wieder gewechselt werden oder der Energiespeicher an eine externe Energiequelle zum Laden angeschlossen werden. Während des Ladevorgangs steht der Einkaufswagen dann für seine eigentliche Funktion, den Transport von Waren, nicht zur Verfügung. Hingegen versorgt die erfindungsgemäße Halterung den Einkaufswagen mit Energie, wenn der Kunde sie an einem Einkaufwagen befestigt. Sie stellt die Energie also genau dann zur Verfügung, wenn der Kunde den Einkaufswagen nutzt. Die durch die Halterung gewährleistete Energieversorgung des Einkaufswagens ermöglicht den Einsatz elektrischer oder elektronischer Komponenten am Einkaufswagen, beispielsweise den Betrieb eines Displays. Zudem kann ein Energiespeicher des Einkaufswagens vom Energiespeicher der Halterung aufgeladen werden, so dass die Energie verbrauchenden Funktionen des Einkaufswagens auch nach Trennung von Halterung und Einkaufswagen weiterbetrieben werden können.

Mit welcher Art von mobilem Endgerät die Halterung zusammenwirkt, spielt für ihre Eignung als Energiequelle für den Einkaufswagen keine Rolle. Somit ist die Eignung der Halterung als Energieversorger des Einkaufswagens nicht von ihrer Funktion als Halterung für ein mobiles Telekommunikations-Endgerät abhängig, sondern kann losgelöst davon betrachtet werden. So ist es durchaus vorteilhaft, diese Eigenschaft auch bei einer Halterung für ein anderes mobiles Endgerät, beispielsweise einem Selfscanner, vorzusehen.

Jede der kabelgebundenen Schnittstellen der Halterung ist vorzugsweise so in die Halterung integriert, dass mit Einsetzen eines mobilen Endgeräts in die Aufnahme ein Kontakt zur korrespondierenden kabelgebundenen Schnittstelle des mobilen Endgeräts herstellbar ist. Das mobile Endgerät wird somit beim Einsetzen in die Aufnahme auch in die kabelgebundene Schnittstelle der Halterung eingeführt. Eine zusätzliche Aktion des Kunden ist nicht erforderlich. Moderne Smartphones weisen genormte Schnittstellen auf, beispielsweise in Form eines Micro-USB-Anschlusses. Damit eignet sich eine entsprechende Schnittstelle an der Halterung herstellerübergreifend für eine Vielzahl der heute verfügbaren Smartphones.

Derselbe Vorteil besteht für die kabelgebundenen Schnittstellen zwischen Halterung und Einkaufswagen beim Befestigen der Halterung. Es ist somit sinnvoll, auch die entsprechenden Schnittstellen zwischen Halterung und Einkaufswagen so anzuordnen, dass bei einem Einsetzen der Halterung ein Kontakt zu einer korrespondierenden kabelgebundenen Schnittstelle des Einkaufswagens oder Einkaufswagengriffs herstellbar ist.

Wie die für das Selfscannen erforderlichen Selfscanner wird die Halterung dem Kunden vom Handel zur Verfügung gestellt und ihm im Geschäft für seinen Einkauf ausgegeben. Die Bereitstellung und Ausgabe der Halterung kann den bekannten, meistens automatisierten Ausgabestationen für die Selfscanner entsprechen. Der Kunde findet in der von ihm besuchten, das Selfscannen anbietenden Filiale meist eine automatische Ausgabestation vor, eine sogenannte Scannerwand, aus der er einen Selfscanner für seinen Einkauf entnimmt. Eine manuelle Ausgabe der Halterung ist selbstverständlich ebenfalls möglich.

Die Ausgabestation für die Halterung kann neben der eigentlichen Aufbewahrung noch weitere Aufgaben erfüllen. Zum anderen werden die Halterungen in der Ausgabestation gegen unbefugte Entnahme gesichert. In der Ausgabestation ist die Halterung so lange arretiert, bis er von einem Kunden angefordert wird. Vor der Entnahme muss sich der Kunde identifizieren. Die Identifikation erfolgt beispielsweise durch das Einlesen seiner Kundekarte an der Ausgabestation. Einer bestimmten der in der Ausgabestation gehaltenen Halterungen wird darauf hin die Kundenkarte zugeordnet und ihre Arretierung gelöst. Zusätzlich kann dem Kunden signalisiert werden, welche Halterung zur Entnahme bereitsteht. Dies kann beispielsweise durch ein Lichtsignal erfolgen.

Um Halterungen für möglichst viele Smartphone-Modelle anbieten zu können, macht es Sinn, die im Geschäft bereitgestellten Halterungen zu diversifizieren. Somit können die Halterungen Aufnahmen aufweisen, die jeweils für die Aufnahme eines oder mehrere Smartphone-Modelle ausgebildet sind. Die Aufnahmen werden hierzu an die äußere Form der Modelle sowie die Position und Ausformung der Schnittstelle der Modelle angepasst. Somit kann das erfindungsgemäße Bezahlsystem ständig an neu herausgekommene Smartphones angepasst werden

Von Vorteil ist es, wenn dem vom Kunden genutzten mobilen Telekommunikations-Endgerät ohne großen Aufwand eine geeignete Halterung zugeordnet werden kann. Die einfachste Lösung hierfür ist eine Kennzeichnung der Halterungen, anhand derer erkennbar ist, für welches Modell sie geeignet ist. Werden die Halterungen in einer Scannerwand vorgehalten, können die jeweiligen Halterungen in verschiedenen, dafür vorgesehenen Abschnitten der Scannerwand vorgehalten werden.

Vorteilhafterweise identifiziert sich der Kunde an der Scannerwand, um eine Halterung entnehmen zu können. Wird eine Halterung nur nach Identifikation des Kunden herausgegeben, ist der Kunde angehalten, die Halterung nach Gebrauch auch wieder zurück zu geben. Dies verhindert zuverlässig einen Diebstahl oder eine versehentliche Mitnahme der Halterung. Als Identifizierungsmerkmal eignet sich eine Kundenkarte, mit welcher der Kunde in dem Geschäft registriert ist. Von besonderem Vorteil ist es, wenn die Daten auf der Kundenkarte eine Information über das vom Kunden genutzte Smartphone enthalten. Hierdurch ist es möglich, nach Auslesen der Kundenkarte dem Kunden eine oder mehrere Halterungen anzuzeigen, deren Aufnahme für das von ihm genutzte Modell ausgebildet ist. Der Kunde erhält somit ein Signal, insbesondere ein Lichtsignal, anhand dem er eine geeignete Halterung auffinden kann.

Alternativ oder zusätzlich kann ihm auch eine der geeigneten Halterung zur Entnahme bereitgestellt werden. Dies ist insbesondere dann von Vorteil, wenn die in der Scannerwand vorgehaltenen Halterungen gegen eine unbefugte Entnahme gesichert sind. In diesem Fall wird eine der geeigneten Halterungen bei Auslesen der Kundekarte entsichert, so dass der identifizierte Kunde sie entnehmen kann.

Alternativ oder zusätzlich dazu kann eine Abfragevorrichtung vorgesehen sein, über welche der Kunde eine für sein Smartphone geeignete Halterung selektieren kann. Eine solche Abfragevorrichtung kann beispielsweise ein Display sein, auf dem verschiedene Modelle von Smartphones dargestellt sind und ausgewählt werden können.

Vorzugsweise wird die vom Kunden entnommene Halterung der Kundenkarte zugeordnet, so das bei Rückgabe der Halterung eine Zuordnung zur Kundenkarte erfolgen kann. Auf diese Weise lässt sich insbesondere der Verbleib von fehlenden Halterungen nachvollziehen.

Als Alternative zur Identifikation über die Kundenkarte bietet sich eine Identifikation über die Rufnummer des Smartphones an oder eine für die Identifikation eines Smartphones geeignete, sozusagen personalisierte App an.

Vorzugsweise können eine oder mehrere der Schnittstellen auch kabellos ausgebildet sein. Für die kabellose Datenübertragung sind entsprechende Normen hinlänglich bekannt. Die kabellose Energieübertragung kann beispielsweise über elektromagnetische Induktion oder Spulenresonanz. erfolgen. Die hierfür erforderlichen Komponenten können ohne großen Aufwand an der Halterung angeordnet oder in diese integriert werden. Die kabellose Verbindung hat den Vorteil, dass sie nicht auf eine physische Kupplung der Schnittstellen angewiesen ist, so dass die Position des mobilen Endgeräts flexibler ist.

Optional lädt die Ausgabestation den in der bevorzugten Ausführungsform der Halterung vorhandenen Energiespeicher. Damit wird gewährleistet, dass der an den Kunden ausgegebene Halterung während des Einkaufs über genügend Energie verfügt um das mobile Endgerät und/oder den Einkaufswagen und/oder seine eigenen Funktionalitäten mit Energie zu versorgen.

Von besonderem Vorteil ist es, wenn vor oder bei der Ausgabe einer Halterung der Energiespeicher, insbesondere sein Ladestatus, geprüft wird. Dies erlaubt eine Selektion der verfügbaren Halterungen, so dass nur Halterungen, deren Energiespeicher ausreichend gefüllt ist, zur Ausgabe kommt, Halterungen, deren Energiespeicher nicht ausreichend gefüllt ist, können auf diese Weise weiter aufgeladen werden. Alternativ kann der Energiespeicher dieser Halterung ausgetauscht werden. Das Überprüfen des Energiespeicher ermöglicht somit, die Halterungen erst dann zur Ausgabe freizugeben, wenn ihr Energiespeicher über genügend Energie für einen Nutzungszyklus verfügt.

Der Kunde kann nun sein mobiles Endgerät während seines Einkaufs als Selfscanner nutzen. Bei Beendigung des Einkaufs begibt er sich zur Kasse. Der eigentliche Bezahlvorgang wird gestartet, indem er die Halterung an das Kassenpersonal übergibt. In eine dafür gedachte Schnittstelle am Kassensystem eingesetzt, wird eine Verbindung zwischen Kassensystem und Halterung bzw. mobilem Endgerät hergestellt und die Daten ausgelesen.

Ein besonderer Vorteil bei der Anwesenheit von Kassenpersonal beim Bezahlvorgang ist, dass eine Kontrolle mit einem Abgleich zwischen Waren und dem Kassenzettel durch Inaugenscheinnahme möglich ist.

Die Vorteile dieses Systems liegen auf der Hand. Der Kunde muss die Waren zum Bezahlen nicht mehr erneut aus dem Einkaufswagen entnehmen und wieder Einladen. Er kann sie bereits während des Einkaufens im Einkaufswagen auf die von ihm gewünschte Art sortieren. Darüber hinaus wird der Kassiervorgang erheblich beschleunigt. Das Kassenpersonal muss nicht mehr jede einzelne Ware greifen, einscannen und wieder ablegen, sondern lediglich die Daten einlesen und den angezeigten Betrag kassieren. Aufgrund des erheblich kürzeren Vorgangs kann ein Bruchteil des bisher benötigten Kassenpersonals die gleiche Arbeit leisten. Zusätzlich konnte festgestellt werden, dass Selfscanning-Kunden im Durchschnitt einen höheren Einkaufswert haben als konventionell bezahlende Kunden. Das Anbieten eines Selfscanning-Systems erhöht somit auch den Umsatz pro Kunde.

Selfscanning-Systeme bringen noch weitere Vorteile mit sich. Üblicherweise legt der Kunde die von ihm ausgesuchten Waren in einer bestimmten Sortierung in den Einkaufswagen, beispielsweise schwere Waren nach unten, druckempfindliche Waren nach oben. Diese Sortierung wird umgekehrt, wenn der Kunde seine Waren auf ein Kassen-Förderband legen muss. In dieser umgekehrten Reihenfolge werden die Waren vom Kassenpersonal eingescannt. Die in der Schlange weiter hinten stehenden Kunden erzeugen dabei einen Zeitdruck, der es nicht erlaubt, die vom Kassenpersonal nach dem Scannen auf das abtransportierende Förderband gelegten Waren erneut zu sortieren. Sie landen meist in der Reihenfolge im Einkaufswagen, wie sie gerade vom Kunden aufgenommen werden können. Erst später, beim Verpacken in Taschen oder Beladen des Autos, können sie erneut sortiert werden. Damit wurde der Kunde quasi dazu genötigt, mit den von ihm gekauften Waren unachtsam um zu gehen. Dies wird bei Setfscanning-Systemen vermieden.

Grundsätzlich ist es möglich, den gesamten Bezahlvorgang noch weiter zu automatisieren und an einer automatischen Station ohne Kassenpersonal durch zu führen. An einer solchen Self-Checkout Station verbindet der Kunde die Halterung mit einer korrespondierenden Schnittstelle an der Station. Nach dem Verbinden werden die Daten, insbesondere die Einzelpositionen und er Gesamtbetrag, ausgelesen. Der Kunde zahlt mit einem zugelassenen Zahlungsmittel und retouniert die Halterung gegen Quittungsbeleg. Der Einsatz von Self-Checkout-Stationen reduziert den Personalbedarf zusätzlich.

Vorzugsweise umfasst die Halterung ein zweites Befestigungsmittel zur lösbaren Verriegelung des mobilen Endgeräts an der Halterung. Eine solche Verriegelung hat den Vorteil, dass der Kunde vor Diebstahl geschützt ist. Er kann ausschließen, dass sein verriegeltes mobiles Endgerät in einem unbeaufsichtigten Moment gestohlen wird. In einer besonders bevorzugten Ausführungsform der Verriegelung weist das zweite Befestigungsmittel einen Bügelverschluss auf, mit der zumindest ein Teilbereich des Endgeräts umgriffen werden kann und der im geschlossenen Zustand das in der Aufnahme der Halterung gehaltene mobile Endgerät verriegelt. Bei der Ausgestaltung der Aufnahme für die Halterung und des zweiten Befestigungsmittels ist darauf zu achten, dass die Kamera des mobilen Endgeräts nicht verdeckt wird.

Vorzugsweise ist die Verriegelung bei Betätigung zweier einander entgegensetzt an der Aufnahme angeordneter Tasten verstellbar. Die voneinander beabstandeten Tasten sind leicht zu bedienen und verhindern gleichzeitig eine unabsichtliche Verstellung der Verriegelung durch versehentliches Berühren. Darüber hinaus zwingen sie den Kunden, beim Öffnen oder Schließen der Verriegelung seine geöffnete Hand vor die Aufnahme zu halten, wodurch ein versehentliches Herausfallen des mobilen Endgeräts aus der Aufnahme verhindert wird.

Eine zusätzliche Sicherung ergibt sich, wenn der zum Lösen der Verriegelung zu betätigende Mechanismus blockierbar ist. Eine Blockade ermöglicht es dem Kunden, sich frei im Geschäft zu bewegen und sein in der Halterung befindliches mobiles Endgerät auch ohne ungutes Gefühl einmal aus den Augen zu lassen.

Eine solche Blockierung ist ein in die Halterung integriertes oder ein am Einkaufswagen angeordnetes Fingerabdruck-Lesegerät. Eine weitere Möglichkeit besteht darin, die Entriegelungsfunktion über eine App zu steuern, die beispielsweise vom Handelsunternehmen zur Verfügung gestellt wird. Die Halterung erlaubt es, eine solche elektronische Sicherungs- und Entriegelungsfunktionen am Einkaufswagen vorzusehen Der Energiespeicher der Halterung gewährleistet eine zuverlässige Versorgung des Einkaufswagens und seiner Komponenten mit Energie. Insbesondere wird die Energie immer dann bereitgestellt, wenn die Halterung und damit der Einkaufswagen von einem Kunden benutzt wird. Damit ermöglicht die Halterung auf einfache Weise eine Bereitstellung elektrischer und/oder elektronischer Funktionen am Einkaufswagen.

Vorzugsweise weist der Einkaufswagen, insbesondere der Einkaufswagengriff, einen eigenen Energiespeicher auf, der über den Energiespeicher der Halterung aufgeladen wird. Dieser eigene Energiespeicher ermöglicht den Betrieb elektrischer und/oder elektronischer Funktionen am Einkaufswagen auch ohne Anschluss der Halterung. Der eigene Energiespeicher ermöglicht es beispielsweise einem am Einkaufswagen befestigten elektronischen Display Informationen auch dann darzustellen, wenn die Halterung vom Einkaufswagen wieder gelöst wurde.

Als Alternative zur automatischen Blockierung wird die Blockade des Mechanismus manuell durchgeführt. Hierfür kann beispielsweise ein Zahlenschloss vorgesehen werden. Das Zahlenschloss wird nach der Verriegelung eingestellt und kann nur mit der dem Kunden bekannten Zahlenfolge wieder geöffnet werden.

Vorzugsweise umfasst das erste Befestigungsmittel Stifte oder Dorne, welche durch Verspreizen die Halterung in einer Öffnung des Einkaufswagens, insbesondere in einer Öffnung eines Einkaufswagengriffs fest halten. Am Einkaufswagen oder Einkaufswagengriff wird hierfür eine Aufnahme für die Halterung vorgesehen, deren Form mit den Stiften oder Dornen korrespondiert. Eine derartige Befestigung bietet sicheren Schutz gegen ungewolltes Lösen der Halterung, mit den entsprechenden Sicherheitsvorkehrungen auch gegen unberechtigte Entnahme.

Dabei ist es von Vorteil, wenn das erste und das zweite Befestigungsmittel miteinander verbunden sind, so dass eine Verriegelung des zweiten Befestigungsmittels eine Verriegelung eines erstes Befestigungsmittel auslöst. Der die Halterung nutzende Kunde muss in diesem Fall lediglich ein Element bedienen, um beide Verschlüsse zu verriegeln.

Besonders vorteilhaft ist es, dass die Verspreizung der Stifte oder Dornen auf einfache Weise mit dem Mechanismus zur Verriegelung des Bügelverschlusses verbunden werden kann. Die Bewegung des Bügelverschlusses beim Herunterdrücken zur Teilumfassung des mobilen Endgeräts kann ohne großen Konstruktionsaufwand in eine Spreizung der Stifte oder Dome am entgegengesetzten Ende der Halterung umgesetzt werden.

In einer besonders bevorzugten Ausführungsform werden das erste und/oder das zweite Befestigungsmittel elektronisch entriegelt. Die elektronische Entriegelung bietet den Vorteil, das der Kunde sich mit der Funktion des Entriegelungsmechanismus nicht befassen muss. Der Kunde muss die elektronische Entriegelung lediglich auslösen. Ein Verständnis der mechanischen Abläufe und Zusammenhänge ist nicht weiter erforderlich. Dies macht die elektronische Entriegelung für den Kunden besonders komfortabel. Darüber hinaus wird eine Fehlbedienung zuverlässig ausgeschlossen, wodurch der Personalaufwand für benötigte Erläuterungen und Hilfestellungen deutlich reduziert wird.

Ist der Ver- bzw. Entriegelungsmechanismus des ersten Befestigungsmittels nicht am Einkaufswagen, sondern an der Halterung angeordnet, ist es von Vorteil, auch die elektronische Entriegelungsfunktion des ersten Befestigungsmittels an der Halterung anzuordnen.

Die für die elektronische Entriegelung erforderliche Energie steht üblicherweise über den Energiespeicher der Halterung zur Verfügung. Alternativ kann, wenn vorhanden, auf Energie aus dem Energiespeicher des Einkaufswagen zurückgegriffen werden. Dies kann beispielsweise vorgesehen werden, wenn der Energiespeicher der Halterung nicht mehr über genügend Energie verfügt. Ebenfalls ist es möglich, für den Entriegelungsvorgang auf den Energiespeicher des mit der Halterung verbundenen mobilen Endgeräts zurück zu greifen. Wenn trotz alledem keine Energie verfügbar ist, sollte die Verriegelung immer noch mechanisch gelöst werden können.

Vorzugsweise wird die elektronische Entriegelung über eine App des mobilen Endgeräts gesteuert. Ist das mobile Endgerät mit der Halterung verbunden, kann die auf dem mobilen Endgerät laufende App auf die elektronische Entriegelung zugreifen und diese auslösen. Eine besonders einfache Lösung ist das Auslösen über einen Code, der am mobilen Endgerät eingegeben wird. Der Kunde muss hierfür lediglich vorab den von ihm gewünschten Code, beispielsweise eine Zahlenkombination, in der App definieren. Die App kann auch verschiedenen Entriegelungsvorgänge vorsehen und hierzu verschiedene Codes abfragen, beispielsweise die Entriegelung nur des mobilen Endgeräts oder des Endgeräts und der Halterung. Die Eingabe des jeweiligen Codes in die App löst dann die gewünschte Entriegelung aus. Für den Fall, dass der Kunde seinen Code vergessen hat, kann der Händler eine Art Masterkey oder -code vorhalten, mit dem die Verriegelungen zu lösen sind. Um dies zu vermeiden ist es vorteilhaft, den Kunden beim Verbinden des mobilen Endgeräts mit der Halterung auf zu fordern, den von ihm definierte Code zur Kontrolle einzugeben oder einen neuen zu definieren.

Eine solche App kann vom Händler zum Herunterladen angeboten werden, beispielsweise über seine Internetseite. Dies ermöglicht es dem Kunden, die benötigten Daten bereits im Vorfeld in die App einzugeben. Insbesondere kann die elektronische Entriegelungsfunktion auch in eine umfassendere App des Händlers eingebunden sein, die von ihm zur Installation angeboten wird. Dem Kunde wird mit einer solchen App dann eine Sammlung verschiedener, vom Händler angebotener Funktionen rund um den Einkauf zur Verfügung gestellt.

Von besonderem Vorteil ist es, wenn die App in einem Datenspeicher der Halterung vorgehalten wird. Dann kann sie dem Kunden bei Verbindung der Halterung mit seinem mobilen Endgerät zur Installation angeboten werden. Dieses Angebot spricht insbesondere einen Erstkunden oder einen Kunden an, der bisher das Angebot des Händlers im Internet nicht wahrgenommen hat. Er wird dadurch in die Lage versetzt, die App ohne großen Aufwand und in dem Moment, wo er sie nutzen kann, zu installieren. Die von der App benötigten Daten kann der Kunde während oder im Anschluss an die Installation eingeben. Dieses Angebot verstärkt die Bereitschaft des Kunden, die App des Händlers zu installieren und trägt damit zu ihrer Verbreitung und der durch ihre Nutzung verbesserten Kundenbindung bei.

In diesem Zusammenhang sollte natürlich geprüft werden, ob das Angebot zur Installation unterbleibt, da auf dem mobilen Endgerät bereits eine App des Händlers vorhanden ist. Ebenso kann geprüft werden, ob für die vorhandene App eine neuere Version bereit steht, die als Update angeboten werden kann. Auf diese Weise kann gewährleistet werden, dass die Kunden die jeweils aktuelle App verwenden.

Ebenso ist es von Vorteil, wenn die App durch die Verbindung zwischen mobilen Endgerät und Halterung geöffnet und aktiviert wird. Der Kunde kann dann sofort auf die von der App bereitgehaltenen Funktionen zugreifen und muss die App im Geschäft des Händlers nicht manuell starten.

Alternativ oder zusätzlich kann die App bei Verbindung des mobilen Endgeräts mit einem Netzwerk des Händlers, das über drahtlose Nahfeldkommunikation bereitgestellt wird, zur Installation angeboten werden.

In einer weiteren besonders bevorzugten Ausführungsform weist die Halterung eine Datenverarbeitungseinheit und einen Datenspeicher auf. Die Halterung verfügt also über eigene Rechen- und Speicherkapazität. Ihre Funktionalität geht damit über die Bereitstellung von mechanischen und elektronischen Schnittstellen hinaus. Über den Datenspeicher und die Recheneinheit lassen sich beispielsweise Informationen an den Kunden übermitteln, die ihm auf seinem mobilen Endgerät angezeigt oder als Sprache ausgegeben werden. Die Recheneinheit kann auch zur Steuerung oder Auswertung eines am Einkaufswagen angeordneten GPS-Empfängers, Transponders oder Scanners eingesetzt werden. Darüber hinaus wird es möglich, die über das mobile Endgerät gescannten Daten im Datenspeicher abzulegen. Für den Bezahlvorgang ist es dann lediglich erforderlich, die Halterung mit dem Kassensystem zu verbinden und die Daten aus dem Datenspeicher auszulesen. Das mobile Endgerät kann beim Kunden verbleiben.

In einer bevorzugten Ausführungsform umfasst die Halterung eine fünfte Schnittstelle zur Übertragung von Daten vom Einkaufswagen an die Halterung. Eine derartige Schnittstelle kann dazu genutzt werden, Daten eines am Korb des Einkaufswagens umlaufenden Scannerbandes auszulesen. Das Scannerband erzeugt dabei ein elektromagnetisches Feld, mit dem Transponder der in den Einkaufswagen gelegten Waren ausgelesen werden können. Besonders vorteilhaft ist dabei, dass die zum Betrieb des Scannnerbandes erforderliche Energie von der Halterung zur Verfügung gestellt werden kann.

In einer weiteren Ausführungsform ist der Einkaufswagen mit Solarzellen als eigene Energiequelle ausgerüstet. Die von den Solarzellen erzeugte Energie steht dann den Funktionen des Einkaufswagen und/oder der Halterung und/oder dem mobilen Endgerät zur Verfügung Die Solarzellen können auf einfache Weise gegen Beschädigung geschützt werden, indem sie in den Einkaufswagengriff integriert werden. Diese Integration hat den weiteren Vorteil, dass die Leitungen zum Befestigung der Halterung am Griff ebenfalls in den Griff integriert werden können und nicht nachträglich angebracht werden müssen.

In einem zum kabelgebundenen alternativen Ausführungsbeispiel erfolgt der Datenaustausch zwischen Schnittstellen kabellos, beispielsweise durch bekannte Systeme der drahtlosen Nahfeldkommunikation.

Das erfindungsgemäße Bezahlsystem ermöglicht dem Groß- und Einzelhandel seinen Kunden ein einfaches, von ihm gern genutztes Bezahlsystem anzubieten, dass ohne großen Personalbedarf betrieben werden kann.

Da die Anschlüsse der auf dem Markt verfügbaren mobilen Endgeräte nicht übereinstimmen, ist es empfehlenswert, für verschiedene Endgerätetypen verschiedene Halterungen vorzuhalten. Die verschiedenen Halterungen verfügen jeweils über eine standardisierte Schnittstelle zum Kassensystem und eine auf einen bestimmten Endgerätetyp abgestimmte Schnittstelle.

Das System bietet darüber hinaus eine große Zukunftssicherheit, da die mobilen Endgeräte ständig weiterentwickelt werden. Damit ist der das System bzw. die Halterung einsetzende Groß- und Einzelhandel ständig auf dem neuesten Stand der Technik, ohne groß eigene Gelder in diese Technik investieren zu müssen.

## Patentansprüche

1. Kombination eines mobilen Telekommunikations-Endgerät und einer Halterung für das mobile Telekommunikations-Endgerät, wobei die Halterung eine Aufnahme für das mobile Telekommunikations-Endgerät aufweist, wobei die Halterung eine erste Schnittstelle zur Übertragung von Daten vom mobilen Telekommunikations-Endgerät an die Halterung aufweist,
wobei die Halterung eine zweite Schnittstelle zur Übertragung von Daten von der Halterung an ein Kassensystem aufweist, wobei die Halterung ein erstes Befestigungsmittel zur lösbaren Befestigung der Halterung an einem Einkaufswagen umfasst, wobei die Halterung einen Energiespeicher aufweist und wobei die Halterung eine dritte Schnittstelle zur Übertragung von Energie an das mobile Telekommunikations-Endgerät umfasst und **dadurch gekennzeichnet, dass** die Halterung eine vierte Schnittstelle zur Übertragung von Energie an den Einkaufswagen umfasst.

2. Kombination nach Anspruch 1,
**dadurch gekennzeichnet,**
**dass** die Halterung ein zweites Befestigungsmittel zur lösbaren Verriegelung des mobilen Telekommunikations-Endgeräts an der Halterung umfasst.

3. Bezahlsystem für den Groß- und Einzelhandel, aufweisend eine Kombination nach einem der Ansprüche 1 bis 2 und ein Kassensystem mit einer Schnittstelle zur Übertragung von Daten von der Halterung an das Kassensystem

4. Verwendung einer Kombination nach einem der Ansprüche 1 bis 2 als Selfscanner.

## Claims

1. A combination of a mobile telecommunications terminal and a holder for the mobile telecommunications terminal, wherein the holder has a receptacle for the mobile telecommunications terminal, wherein the holder has a first interface for transmitting data from the mobile telecommunications terminal to the holder, wherein the holder has a second interface for transferring data from the holder to a point of sale system, wherein the holder comprises a first fastening means for detachably fastening the holder to a shopping cart, wherein the holder has an energy storage device and wherein the holder comprises a third interface for transmitting energy to the mobile telecommunications terminal, **characterized in that** the holder comprises a fourth interface for transmitting energy to the shopping cart.

2. The combination according to Claim 1, **characterized in that** the holder comprises a second fastening means for detachably locking the mobile telecommunications terminal to the holder.

3. A payment system for wholesale and retail trade, having a combination according to any one of Claims 1 to 2 and a point of sale system with an interface for transferring data from the holder to the point of sale system.

4. A use of a combination according to any one of Claims 1 to 2 as a self-service scanner.

## Revendications

1. Combinaison d'un terminal de télécommunication mobile et d'un support pour le terminal de télécommunication mobile, dans lequel le support présente un réceptacle pour le terminal de télécommunication mobile, dans lequel le support présente une première interface pour transmettre des données du terminal de télécommunication mobile au support, dans lequel le support présente une deuxième interface pour transférer les données du support vers un système de caisse enregistreuse, dans lequel le support comprend un premier moyen de fixation pour fixer de manière amovible le support à un panier d'achat, dans lequel le support présente une réserve d'énergie et dans lequel le support présente une troisième interface pour transmettre de l'énergie au terminal de télécommunication mobile et **caractérisé en ce que** le support comprend une quatrième interface pour le transfert d'énergie vers le panier d'achat.

2. Combinaison selon la revendication 1,
**caractérisé en ce que** le support comprend un second moyen de fixation pour verrouiller de manière amovible le terminal de télécommunication mobile sur le support.

3. Système de paiement pour le commerce de gros et de détail, présentant une combinaison selon une des revendications 1 à 2 et un système de caisse enregistreuse avec une interface pour la transmission de données du support vers le système de caisse.

4. Utilisation d'une combinaison selon une des revendications 1 à 2 comme auto-scanner.
